(19) Europäisches Patentamt / European Patent Office / Office européen des brevets

(11) EP 1 995 723 B1

(12) EUROPEAN PATENT SPECIFICATION

(45) Date of publication and mention
of the grant of the patent:
**16.06.2010 Bulletin 2010/24**

(51) Int Cl.:
*G10L 21/02* [(2006.01)]    *G06N 3/08* [(2006.01)]

(21) Application number: **08011695.7**

(22) Date of filing: **09.05.2005**

(54) **Neuroevolution training system**

Trainingssystem einer Neuroevolution

Système d'entraînement d'une neuroevolution

(84) Designated Contracting States:
**AT BE BG CH CY CZ DE DK EE ES FI FR GB GR HU IE IS IT LI LT LU MC NL PL PT RO SE SI SK TR**

(30) Priority: **25.05.2004 US 853803**

(43) Date of publication of application:
**26.11.2008 Bulletin 2008/48**

(62) Document number(s) of the earlier application(s) in accordance with Art. 76 EPC:
**05739447.0 / 1 766 614**

(73) Proprietor: **Nokia Corporation**
**02150 Espoo (FI)**

(72) Inventors:
• **Kontio, Juho**
**02230 Espoo (FI)**
• **Alku, Paavo**
**00680 Helsinki (FI)**
• **Laaksonen, Laura**
**02100 (FI)**

(74) Representative: **Khan, Mohammed Saiful Azam**
**Potter Clarkson LLP**
**Park View House**
**58 The Ropewalk**
**Nottingham**
**NG1 5DD (GB)**

(56) References cited:
• **M N H SIDDIQUE AND M O TOKHI: "Training Neural Networks: Backpropagation vs Genetic Algorithms" PROCEEDINGS OF INTERNATIONAL JOINT CONFERENCE ON NEURAL NETWORKS, 15 July 2001 (2001-07-15), - 19 July 2001 (2001-07-19) pages 2673-2678, XP002466408**
• **D BARRIOS ET AL: "Cooperative binary-real coded genetic algorithms for generating and adapting artificial neural networks" NEURAL COMPUTING & APPLICATIONS, vol. 12, no. 2, November 2003 (2003-11), pages 49-60, XP002466409**

**Description**

FIELD OF THE INVENTION .

The present invention relates generally to systems and methods for quality improvement in an electrically reproduced speech signal. More particularly, the present invention relates to systems and methods for enhanced artificial bandwidth expansion for signal quality improvement.

BACKGROUND INFORMATION

Speech signals are usually transmitted on a conventional telephone bandwidth in telecommunication systems, such as a GSM (Global System for Mobile Communications) network. The traditional bandwidth for speech signals in such systems is less than 4kHz (0.3-3.4 kHz) although speech contains frequency components up to 10 kHz. This limited bandwidth can result in poor performance in both quality and intelligibility of the speech signals. In other words, the limited bandwidth can greatly degrade the naturalness of the transmitted voice signal.

Humans perceive better quality and intelligibility if the frequency band of a speech signal is wideband, i.e. up to 8 kHz. Thus, in order to improve the naturalness of a transmitted speech signal, one approach is to use wideband speech coders such as a wideband adaptive multi-rate (WB-AMR) coder.

Existing methods for improving the quality of narrowband speech by artificial bandwidth expansion can be divided into two groups. In the first group a codebook can be used to generate missing frequency components of the upper band of speech (e.g. between 4.0 kHz and 8kHz). A codebook can comprise frequency vectors of different spectral characteristics, all of which cover the same upper band. The frequency range can be expanded by, on a frame-by-frame basis, selecting the optimal vector and adding into it the received spectral components of the lower band (e.g. 0 kHz to 4 kHz). In a second group, the original narrowband speech can be upsampled in order to create aliased frequency components and the levels of these new frequencies can be adjusted to create the high frequency components of a speech signal.

However, these existing artificial bandwidth expansion methods for improving a narrowband speech signal can suffer from problems and inefficiencies. For example, some of these methods are based on classifying the incoming speech frames by their phonetic content. For example, phonemes like /s/, /k/, and /a/ are classified in different classes. Based on the classification, an upper band envelope can be formed. The envelope can be used to shape the upper band spectrum that was originally obtained from the lower band spectrum by aliasing. However, upper bands generated using this approach are not always very natural. For example, because transitions between different phones in speech can be very smooth, artificial decision boundaries in the classification scheme can create unnecessary discontinuities to the expansion process. Furthermore, misclassification can cause noticeable artifacts. In addition, bandwidth expansion methods that use Linear Prediction (LP) analysis to estimate the behavior of the spectral envelope to attenuate the aliased frequency components can suffer from insufficient attenuation of the aliased frequency components, which in turn, deteriorates the speech quality.

Artificial bandwidth expansion methods based on codebooks require storage of the frequency vectors in order to expand the bandwidth of the received speech sound. Storage of codebooks increases the amount of memory resources needed in order to perform the bandwidth expansion. In addition, because mobile phones are required to be capable of operating in a variety of environments, such as different noise conditions or to transfer speech signals of various languages, it is difficult to configure a codebook that is capable of producing quality bandwidth expansion for the many different environments.

As such, there is a need for an improved system, method, device, and computer code product for artificially expanding the bandwidth of a narrowband speech signal to improve the quality and naturalness of the speech signal.

There may be provided a method for artificially expanding a narrowband signal by expanding the narrowband signal to produce an unshaped wideband signal, forming a magnitude shaping function using a neural network, and amplifying/attenuating the unshaped wideband signal using the magnitude shaping function to form an artificially expanded wideband signal. The unshaped wideband signal can be expanded in any number of ways include by aliasing the narrowband signal.

There may be provided a device for artificially expanding a narrowband signal. One embodiment of the device can include a lowband to highband transfer filter configured for expanding the narrowband signal into an unshaped wideband signal, a neural network configured for forming a magnitude shaping function, and a magnitude shaping module for amplifying/attenuating the unshaped wideband signal according to the magnitude shaping function to form an artificially expanded wideband signal. Embodiments of the device can also include a feature evaluation module configured for evaluating, selecting, and passing features of the narrowband signal on to the neural network, so that the neural network can form the magnitude shaping function based on the features passed by the feature evaluation module. One or more genomes can be used set weights in the neural network. The genomes can be produced by an evolution module based on a simulation environment configured to simulate an environment in which the device is used. The lowband to highband transfer filter can be configured to form the unshaped wideband signal any number of ways including alias the narrowband signal.

There may be provided a mobile communication device having a receiver, a lowband to highband transfer filter, a neural network, and a magnitude shaping module. The receiver can be capable of receiving a narrowband speech signal. The lowband to highband transfer filter can be capable of expanding the narrowband signal into an unshaped wideband signal. The neural network can be capable of forming a magnitude shaping function based on features of the narrowband speech signal. The magnitude shaping module can be capable of amplifying/attenuating the unshaped wideband signal according to the magnitude shaping function to form an artificially expanded wideband speech signal.

There may be provided a transcoder device configured for operating in a communication network. The transcoder can include a receiver capable of receiving a narrowband speech signal, a lowband to highband transfer filter capable of expanding the narrowband signal into an unshaped wideband signal, a neural network capable of forming a magnitude shaping function based on features of the narrowband speech signal, a magnitude shaping module for amplifying/attenuating the unshaped wideband signal according to the magnitude shaping function to form an artificially expanded wideband speech signal, and a transmitter capable of transmitting the artificially expanded wideband speech signal.

There may be provided a system for artificially expanding the bandwidth of a narrowband speech signal. The system can include an evolution subsystem capable of producing one or more genomes based on a simulation environment configured to simulate an environment in which a communication device is used and an online processing subsystem capable of artificially expanding the bandwidth of a narrowband speech signal. The online processing subsystem may include a lowband to highband transfer filter capable of expanding the narrowband speech signal into an unshaped wideband signal, a neural network capable of forming a magnitude shaping function based on features of the narrowband speech signal, and a magnitude shaping module for amplifying/attenuating the unshaped wideband signal according to the magnitude shaping function to form an artificially expanded wideband speech signal. The genomes produced by the evolution subsystem may be used to set weights in the neural network.

There may be provided computer code products for artificially expanding a narrowband speech signal. One embodiment of a computer code product can include computer code configured to expand the narrowband speech signal to produce an unshaped wideband signal, form a magnitude shaping function using a neural network, and amplify/attenuate the unshaped wideband signal using the magnitude shaping function to form an artificially expanded wideband signal.

Embodiments of the invention relate to neuroevolution training systems for creating genomes for use by an online processing system capable of expanding narrowband speech signals into an artificially expanded wideband speech signals. One embodiment of a neuroevolution training system according to the present invention, as defined by the appended claims, can include a learning sample management module configured to manage speech samples that can be used to train the system, a fitness evaluation module configured to evaluate the quality of the artificially expanded wideband speech signals, and an evolution module configured to perform an artificial evolution by mutating and recombining the genomes based on the evaluation of the fitness evaluation modules. The fitness evaluation module may be configured to compare the artificially expanded wideband speech signal to a corresponding speech sample in the learning sample management module to determine if the artificially expanded wideband speech signal is similar to the original wideband sample of speech. The fitness evaluation module may also be configured to produce an objective fitness value of the artificially expanded wideband speech signal. The evolution module may be configured to use the object fitness value to create a fitness ranking for the genomes. The evolution module can be configured to select genomes for reproduction based fitness rankings for the genomes. The evolution modules may also act as a process controller for directing operation of the learning sample management module and the fitness evaluation module. Prior art examples of genetic algorithms applied to the training of neural networks can be found e.g. in MNH SIDDIQUE ET AL: "Training Neural Networks: Backpropagation vs Genetic Algorithms, Proc. International Conference on Neural Networks, July 2001 ; and D BARRIOS ET AL: "Cooperative binary real coded genetic algorithms for generating and adapting certificial neural networks", Neural Computing and Applications, vol. 12, no 2, November 2003.

Other principle features and advantages of the invention will become apparent to those skilled in the art upon review of the following drawings, the detailed description, and the appended claims.

## BRIEF DESCRIPTION OF THE DRAWINGS

FIG. 1 is a block diagram of an evolution system in a simulation environment.

FIG. 2 is a block diagram of an evolution subsystem (connected to an online processing subsystem)in accordance with the present invention.

FIG. 3 is a flow chart illustrating one embodiment of an evolution subsystem learning process in accordance with the present invention.

FIG. 4 is a graphical representation of a raised cosine bandpass filter.

FIG. 5 is a graphical representation of embodiments of frame distance measurements in accordance with the present invention.

FIG. 6 is a block diagram illustrating an online processing subsystem.

FIG. 7 is a flow chart illustrating an online processing subsystem bandwidth expansion process.

FIG. 8 is a block diagram illustrating a neural network that can be used with the present invention.

FIG. 9a is graphical representation of one example of an original narrowband signal to be processed with the present invention.

FIGs. 9b, c, and d are graphical representations of various examples of unshaped wideband signals generated from the narrowband signal of FIG. 9a.

FIG. 10a is a graphical representation of one example of an unshaped wideband signal.

FIG. 10b is graphical representation of one example of magnitude shaping curve for the unshaped wideband signal of FIG. 10a.

FIG. 10c is a graphical representation of one example of an expanded wideband signal shaped by the magnitude shaping curve of FIG. 10b.

FIG. 11 is a block diagram illustrating one example of an artificial bandwidth expansion system.

FIG. 12 is a diagrammatical representation illustrating one example of an artificial bandwidth expansion system applied in a network.

FIG. 13 is a diagrammatical representation illustrating one example of an artificial bandwidth expansion system applied at a mobile terminal.

DETAILED DESCRIPTION OF THE PREFERRED EMBODIMENTS

Embodiments of the current invention relate to improving quality (naturalness, richness, etc.) of an electrically reproduced speech signal by artificially expanding the bandwidth of the sound. For example, the quality of narrowband speech transmitted in a telecommunications network can be improved by inserting into it new frequency components that may not have been transmitted. The naturalness of telephone speech received by a mobile terminal or network can be improved by artificially doubling the bandwidth of the sound. Hence, it is possible to convert narrowband speech to a wideband form without explicitly using wideband speech coding methods. One particular situation in which embodiments of the invention can be particularly useful is in communication systems which handle both narrowband and wideband encoded transmitted speech. In this situation, the difference in quality between the signals is decreased by artificially converting narrowband signals into wideband signals.

Control points generated by a neural network, fuzzy logic controller, or other device or method from features of the original narrowband signal can be used to shape the upper band spectral envelope of an unshaped wideband signal transformed from the original narrowband signal. The neural network can be trained with variable data to evolve networks capable of performing well in different environments (e.g. different noise types, noise levels, languages, speech codecs, etc.). A neuroevolution method (the process of evolving neural network controllers for different control tasks) based on genetic algorithms is used to evolve the artificial neural network. An upper frequency band can be generated as a mirror image by aliasing the narrowband spectral information. The neural network can be configured for analyzing the narrowband speech frames and producing control parameters for spline curves that can be used to amplify/attenuate the spectral components at the upper frequency band. The evolved networks can be recurrent, meaning that they can internally collect and use "historical information" about the process and are thus not limited to narrowband information from the current processed frame.

A system can include two modes: a learning mode and a processing mode. The learning mode can be configured to evolve new networks capable of performing artificial bandwidth expansion in various environments. The processing mode can be configured to use one of the evolved networks to expand the bandwidth of a received narrowband signal. In order to increase efficiency, the system can be configured so that the learning mode is executed off line to produce a good neural network that can be used in the processing mode online. In this manner, the processing mode remains computationally effective by moving the relatively computationally expensive learning mode off line.

In the learning mode, a population of neural networks is evolved using neuroevolution methods. The population can be tested against training samples and the best performing networks can be recombined and mutated to produce a population of next generation networks. The learning mode can be terminated after a certain number of generations have passed or some specific criterion is met (e.g. the best network produces results that are within a certain range of the original wideband frames). This data oriented approach can make it easier to adapt a network for different operating environments. The system can be trained for the specific operating conditions it will be operating in, thus enabling it to perform better than a generic algorithm.

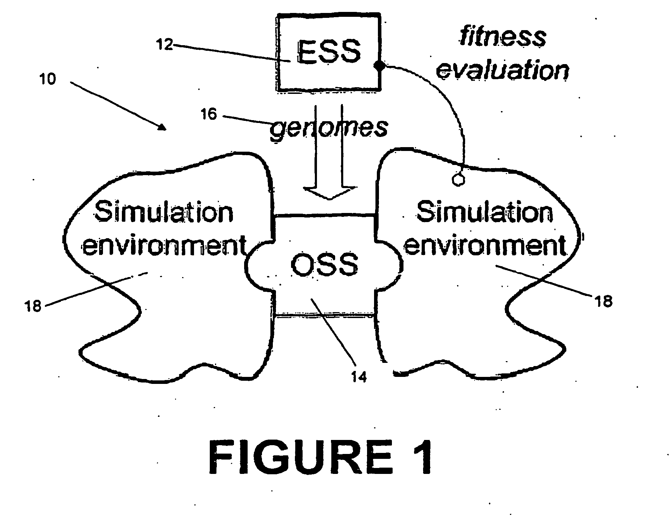

Referring to FIG. 1, a neuroevolution system 10 is shown. The system 10 can include an evolution subsystem (ESS) 12 and an online processing subsystem 14. The evolution subsystem 12 is configured to evolve individual genomes 16 for the online processing subsystem 14 to use. The online professing subsystem 14 is configured to handle, in real-time, the actual bandwidth expansion procedure using the genome 16 passed by the evolution subsystem 12 to configure its modules to expand the bandwidth of a received narrowband speech signal. The evolution subsystem 12 can be used to define what is needed for the bandwidth expansion to be successful. Once the evolution subsystem 12 has found a suitable solution for the problem in a simulate environment 18, the online processing subsystem 14 can be implemented in an actual target environment (such as a telecommunication network and the evolved genome 16 can be used to perform the artificial bandwidth expansion.

The evolution subsystem 12 can be configured to generate a random population of genomes 16 and, using the online processing subsystem 14, expand a predefined set learning samples with each of them. The evolution subsystem 12 can calculate a fitness value for each of the individual genomes 16 by evaluating an objective function, which can, for example, measure the quality of the expansion result using some metric appropriate for the problem. The evolution subsystem 12 can then evolve the population of genomes 16, recombining and mutating the individuals genomes 16. This evaluation-evolution cycle can be continued until a specified end condition is reached.

After an acceptable solution has been found, its genome 16 can be merged with the online processing subsystem 14 to form the final expansion algorithm. Should the processing environment change, a new genome 16 can be evolved later using a similar evolution process in a properly altered simulation environment 18, and installed into the online processing subsystem 14 replacing the old genome 16. This leads to considerable adaptability.

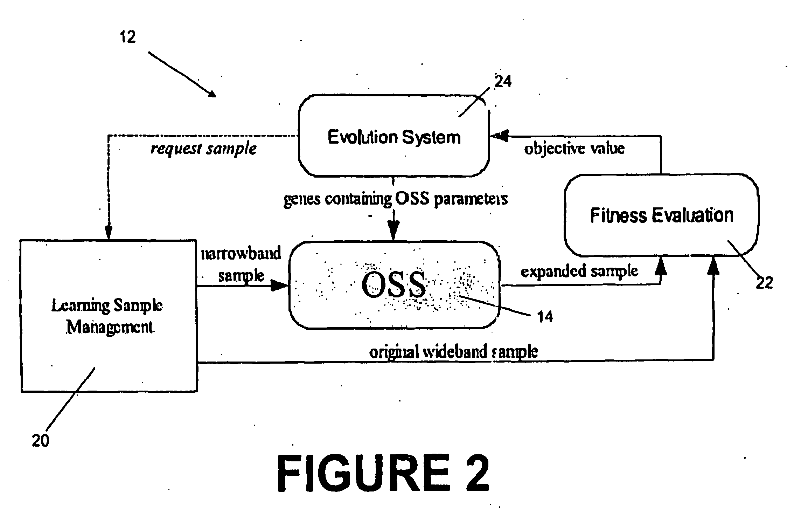

Figure 2 illustrates one embodiment of an evolution subsystem 12 according to the present invention. In this embodiment, the evolution subsystem 12 includes three main modules: a Learning Sample Management Module (LSMM) 20; a Fitness Evaluation Module (FiEM) 22; and an Evolution Module (EM) 24. The LSMM 20 can be configured to manage speech samples that are used to train the system. The FiEM 22 can be configured to evaluate the quality of the expansion made by the online processing system 14 using some metric that measures the psychoacoustic quality of the expanded sample as accurately as possible. For example, the FiEM 22 can be configured to compare the expanded sample to an original wideband sample of the speech signal to determine if the expanded sample is similar to the original wideband sample. The EM 24 can be used to perform an artificial evolution by mutating and recombining the best performing individual genomes 16. Preferably, the modules 20, 22, 24 are configured with simple interfaces such that it is possible to replace one of them without changing the others. This makes the system flexible and enables separate development of the modules 20, 22, 24.

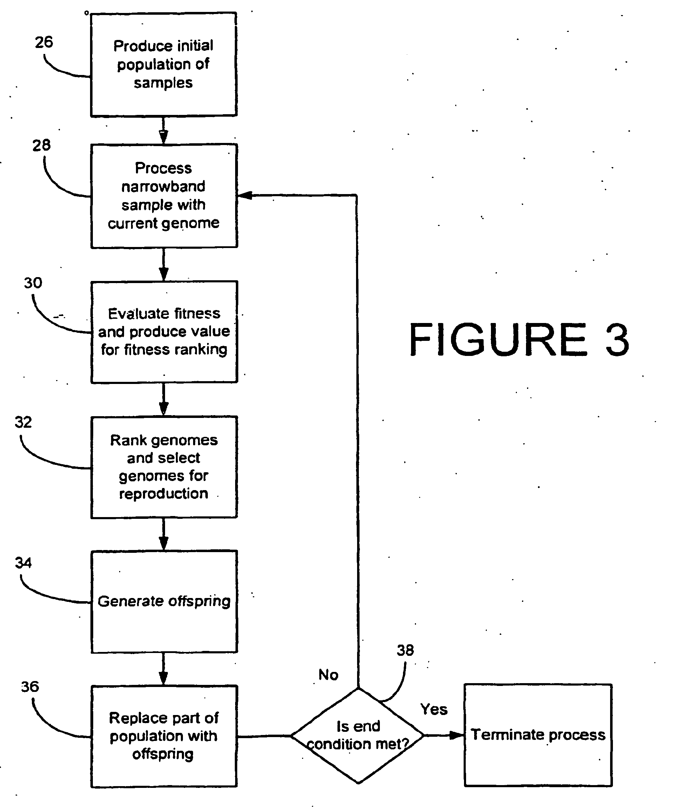

Figure 3 illustrates one embodiment of a learning process of an evolution subsystem according to the present invention. In operation 26 the initial population of solutions in the evolution module is produced. For each of the samples in the LSMM for each of the genomes, the narrowband sample is processed with the online processing subsystem configuring it using the current genome in operation 28 and the fitness is evaluated in the FiEM in operation 30 by comparing the expansion result with the reference signal received from the LSMM and producing an objective value that can be used by the EM to create a fitness ranking for the genomes. In operation 32, the genomes can be ranked by their objective values and genomes for reproduction can be selected using some rank-based selection method. The offspring can be generated by letting the selected genomes reproduce using mutation and crossover in operation 34. In operation 36, part of the population is replaced with the produced offspring and a test is conducted in operation 38 to determine if one of the end conditions is met. For example, the test operation 38 can test for a pre-specified iteration limit or can determine if one of the genomes produces a solution that meets a certain criteria. If the end condition is not met, the process can return to operation 28. If the end condition is met, the learning process can terminate.

In a sample embodiment of the invention, the LSMM 20 can be configured for handling the preprocessing of samples in a training simulation. For example, the LSMM 20 can simulate the processes a telephone speech signal goes through when it is transmitted from the speaker to the receiver. The LSMM 20 can be responsible for providing a narrowband signal to the online processing subsystem 14 during the training simulation and providing the corresponding wideband reference signal to the FiEM 22.

During preprocessing, the samples can be transformed from wideband signals to narrowband signals. Preferably, the system should avoid introducing processing delay or the delay should be countered during the teaching process since signals should be as synchronized as possible in order to maximize effectiveness of the fitness function. Various processing paths can be included in the system.

In order to accommodate an online processing subsystem 14 that uses frame based processing, the narrowband signal can be split into frames of speech, for example 10 ms frames. Some overlap between frames can be used to reduce the effect of FFT windowing and to enable linear averaging between the frames to avoid sudden jumps at frame edges. As such, actual processed frames can be slightly longer than a typical frame length (such as 12.25 ms as opposed to 10 ms).

As described above, the EM 24 can be configured for evolving new genomes that can act as parameters for the online processing subsystem 14. The EM 24 can also act as a process controller for the learning process, directing other modules of the evolution subsystem 12. Multiple possible embodiments of evolution methods can be used to implement various embodiments of the invention.

The EM 24 can be responsible for generating the initial population. In one embodiment, a completely random set of genes can be generated, utilizing a random number generator. Alternatively, a method for initializing the weights of a neural network can be used.

The EM 24 can be optimized to select only certain learning samples in order to decrease the computational load. For example, the population may include multiple samples from the same speaker (person). If so, the EM 24 can be configured to select only one sample per speaker. In addition, the EM 24 can be configured to draw only a prescribed number of random samples for each generation. It may be advantageous to not use all training samples for a predetermined number of initial generations (e.g. the first 150 generations) so that initial evolution can be done quickly.

The FiEM 22 can be used to evaluate how well a given sample was expanded by comparing the expanded signal received from the online processing subsystem 14 to a wideband signal from the LSMM 20. The comparison metric can measure the difference between the two signals as psychoacoustically accurately as possible. A fitness assignment can be used and a ranking based on fitness assignment can be produced for this purpose. By using a ranking system, the actual fitness values are not critical and thus the actual values produced by the metric can be highly nonlinear as long as it introduces an approximate subjective speech quality based on ordering. Alternatively, the FiEM 22 could simply measure whether the expansion improves the speech quality of the narrowband signal and select the algorithm parameters that most improve speech quality. Because spectral envelope of the expanded speech signal can be the principal key for a high subjective quality speech signal produced by a bandwidth expansion system, in one embodiment the spectral metric can be used as the quality measure for the expanded signal.

One embodiment of the invention can use a frame based processing scheme to compute the spectral quality metric between two signals. Frame-based processing is particularly useful in Fast Fourier Transform (FFT) based spectral estimation. One problem with FFT is that it assumes that signals under investigation are Wide-Sense Stationary (WSS). While speech is not a WSS process (since articulators are moving and shaping the vocal tract) selecting a time frame in which the vocal tract movement is negligible (e.g. on the order of 15-20 ms for most vowels) enables use of FFT.

Preferably, the time duration of the analysis frame can be long enough to span at least one pitch period, but also short enough that articulators do not move considerably during the frame. If the frame length is too short, the results can fluctuate very rapidly depending on the exact positioning of the frame. If the frame length is too long, the speech process during may not be stationary enough and the results of the spectral estimation may not be accurate. When selecting the frame length, may be useful to avoid the length used by the expansion process of the online processing subsystem 14, because using the same length might let some frame synchronization error get through as the frame pre-FFT windowing reduces the importance of the samples on the frame edges. Allowing a temporal overlap in frames reduces this risk, but as speech is not stationary and, especially during glides, the exact frame time interval can affect the FFT analysis results considerably, using a different framing scheme for the fitness evaluation may improve the system robustness. The frames may be Hamming windowed prior to using FFT in the spectral quality metric to improve the spectrum estimate.

Many different spectral distance metrics may be used as a quality measure according to embodiments of the present invention. For example the following spectral distortion metric may be used to measure spectral distortion between two envelope shapes in the extension band:

$$D_{HC} = \sqrt{\frac{1}{K} \sum_{k=1}^{K} \int_{0.25\omega_s}^{0.5\omega_s} \left[ 20 \log_{10} \left( G_C \frac{A_k(\omega)}{\hat{A}_k(\omega)} \right) \right]^2 d\omega},$$

where

$$G_C = \frac{1}{0.25\omega_s} \int_{0.25\omega_s}^{0.5\omega_s} 20 \log_{10} \left( \frac{\hat{A}_k(\omega)}{A_k(\omega)} \right) d\omega$$

and $A_k(w)$ is the original and $\hat{A}_k(w)$ the predicted envelope of the $k$'th (temporally aligned) frame of wideband speech and $\omega_s$ is the wideband sampling frequency. The compensating gain factor $G_C$ can have the effect of removing the mean difference between the two envelopes, in which case $D_{HC}$ measures only the spectral distortion between the envelope shapes.

In another embodiment, log spectral distortion (LSD) can be used as a distance metric. For example, for an artificial bandwidth expansion, the following may be used:

$$d^2_{LSD} = \frac{1}{2\pi} \cdot \int_{-\pi}^{\pi} \left( 20 \log_{10} \frac{\sigma_{rel}}{|A_{mb}(e^{j\omega})|} - 20 \log_{10} \frac{\hat{\sigma}_{rel}}{|\hat{A}_{mb}(e^{j\omega})|} \right)^2 d\omega,$$

where $Amb(e^{jw})$ and $\sigma_{rcl}$ denote the modeled frequency spectrum and relative gain of the missing frequency band of the original wideband signal and $\hat{A}_{mb}(e^{jw})$ and $\hat{\sigma}_{rel}$ denote the corresponding parameters of the artificially expanded band.

The LSD can also be expressed in the cepstral domain. For a sequence of speech frames, the root mean square average of the LSD may be given by:

$$\bar{d}_{LSD} = \frac{\sqrt{2}\, 10}{\ln 10} \sqrt{ E\left\{ \frac{1}{2}(c_0 - \hat{c}_0)^2 + \sum_{i=1}^{\infty} (c_i - \hat{c}_i)^2 \right\} }$$

where $E\{\}$ can denote the expectation operation and cepstral coefficients $c_0$, $c_1$, ...can be calculated from the AR coefficients and the relative gain. Other spectral distance metrics, such as log spectral mean-square-error (MSE) or cepstral MSE, can also be used as well without departing from the scope of the invention as defined by the appended claims.

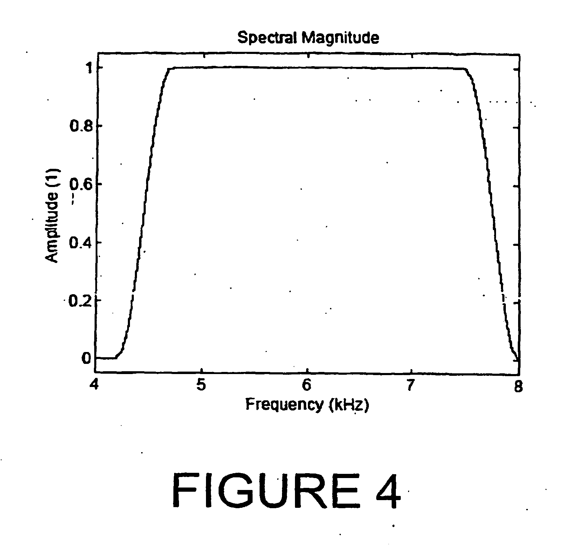

Bandpass filtering in the narrowband signal in a system that expands telephone band speech can present problems. For example, when the base expansion band is generated directly from the narrowband signal the expansion band may have some gaps. Preferably, these gaps should not be included into the spectral distance calculation, as their inclusion can cause a genome to benefit from considerable amplification at the gaps which could add noise to the system. As such, preferably, MSE distance is measured only from the spectral bands which are not generated from the attenuated bands of the narrowband signal. A Lowband to Highband Transform Filter (LHTF) transforms the narrowband input frame into a wideband frame. The LHTF determines which bands are not generated from the attenuated band of the narrowband signal. Similarly, cepstral calculations can filter out the gap bands by using a raised cosine bandpass filter (as shown in Fig. 4) in the spectral domain before continuing with the cepstrum calculation.

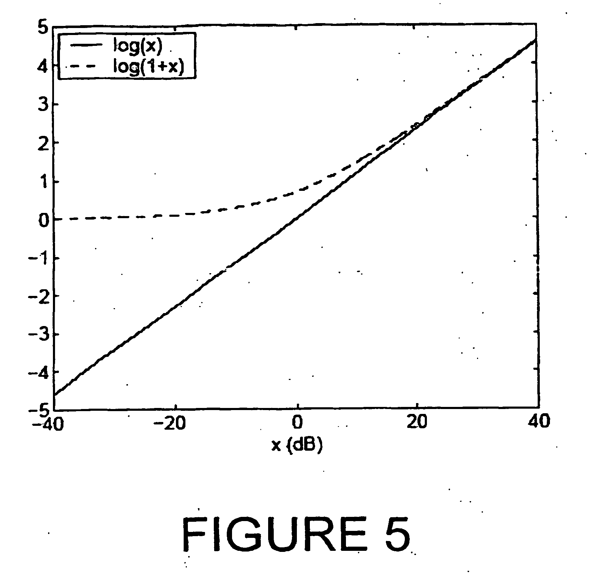

The evolution process can sometimes, especially in the beginning of an evolution, generate genomes that cause extreme attenuations on some spectral bands. These attenuations may, in some cases, be so extreme that due to the limited accuracy of a digital computer, zeros occur in the magnitude spectrum of the frame. In one embodiment, $\log_{10}(1+x)$ instead of $\log_{10}(x)$ is used as the logarithm function in order to make the distance metric more robust against the pathological signal frames which cause zeros to appear in the magnitude spectrum. This also de-emphasized errors that can occur near the spectral zeros (as shown in Fig. 5), which can improve the psychoacoustical expansion results as the errors will probably masked by nearby higher magnitude spectral information. As such, in one embodiment, frame distance measures can be:

$$SMSE_f = \int_{V_1}^{V_2} \left( \log_{10}(1 + |X(\omega)|) - \log_{10}(1 + |\dot{X}(\omega)|) \right)^2$$

$$CMSE_f = \sum_{n=0}^{N_c-1} \left( \int_{-\pi}^{\pi} \ln(1 + |H_{cf}(\omega) X(\omega)|) e^{j\omega n} \right.$$
$$\left. - \int_{-\pi}^{\pi} \ln(1 + |H_{cf}(\omega) \hat{X}(\omega)|) e^{j\omega n} \right)^2$$

where $SMSE_f$ is the frame log spectral mean square error, $V_1$ is the beginning of the valid expansion band, $V_2$ is the end of the valid expansion band, $X(e^{jw})$ is the spectrum of the reference signal frame and $\hat{X}(e^{jw})$ is the spectrum of the expanded signal; and $CMSE_f$ is the frame cepstral mean square error, $N_c$ is the number of cepstral coefficients to include in the evaluation, $H_{cf}$ is the spectral domain raised cosine bandpass filter and $X(e^{jw})$ and $\hat{X}(e^{jw})$ are as before.

The frame objective values can be combined to produce a signal objective value for each genome. In one embodiment, this can be done in two operations. First, quality values for frames of each training signal can be combined to produce an objective value for the signal and then the signal objective values can be combined by simply calculating an average. Ideally, the training data contains an equal number of frames for each phoneme, however, it is also desirable to have the data contain frames in a natural order so that the system can learn to exploit information in the frame order, if recurrent feedback is used.

Preferably, the objective value combiner emphasizes large errors. In one embodiment, this can be done by applying an extra cost factor for errors that are in some sense much larger than the average error level..By doing so, is may be possible to reduce the amount of artifacts in the produced speech.

In another embodiment, the frames are combined to produce a sample objective value by averaging them together. The final genome objective value can be characterized as follows:

$$Obj' := \sum_{s \in S} \frac{\sum_{f \in F(s)} \frac{MSE_f(f)}{|F(s)|}}{|S|} \;.$$

where $S$ is the set of all samples, $F(s)$ is the set of frames in the sample $s$, $MSE_f(f)$ is either the *SMSE* or the *CMSE* of frame $f$ in sample $s$, $|F(s)|$ is : the number of frames in the sample $s$ and $|S|$ is the number of samples in the learning sample set.

The online processing subsystem 14 is responsible for the actual bandwidth expansion. The online processing subsystem 14 can be integrated to the target system. As such, preferably, the online processing subsystem 14 is computationally efficient, straightforward to implement, and as robust as possible. Also, preferably, the online processing subsystem 14 is easy to customize and change, and has the ability to adapt to different operating environments by simple retraining.

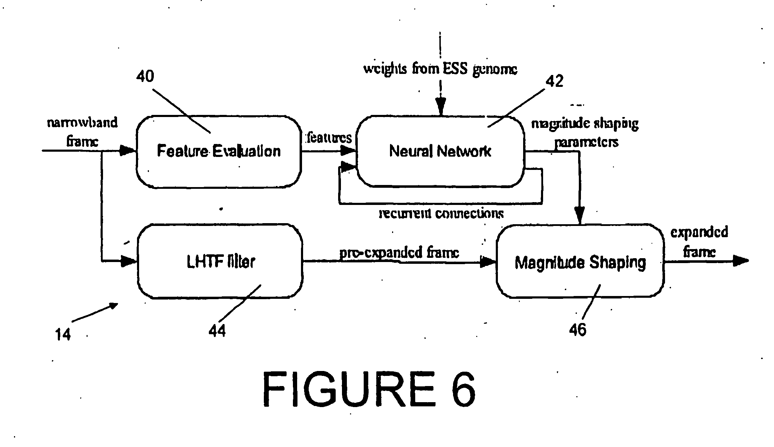

As shown in Fig. 6, the online processing subsystem 14 includes four main modules: a Feature Evaluation Module (FeEM) 40, a Neural Network Module (NNM) 42, a Lowband to Highband Transform Filter (LHTF) 44, and a Magnitude Shaping Module (MSM) 46. Generally speaking, the FeEM 40 is configured to evaluate the features of the frames to be given as inputs to the neural network. The NNM 42, which can be configured by the ESS genome, can be responsible for producing magnitude shaping parameters from the feature inputs. The LHTF 44 can be configured for adding basic highband data to the frame by transforming the lowband. The MSM 46 can be configured to attenuate and/or amplify the highband produced by the LHTF 44 to make it resemble the correct wideband spectrum.

The samples to be expanded can be processed frame by frame. The actual framing may be done in other parts of the system. For example, during evolution the ESS LSMM may do the actual framing or in a live system, the framing may be done by the surrounding telephone system. The online processing subsystem 14 operation can be customized to be used with various different framing methods.

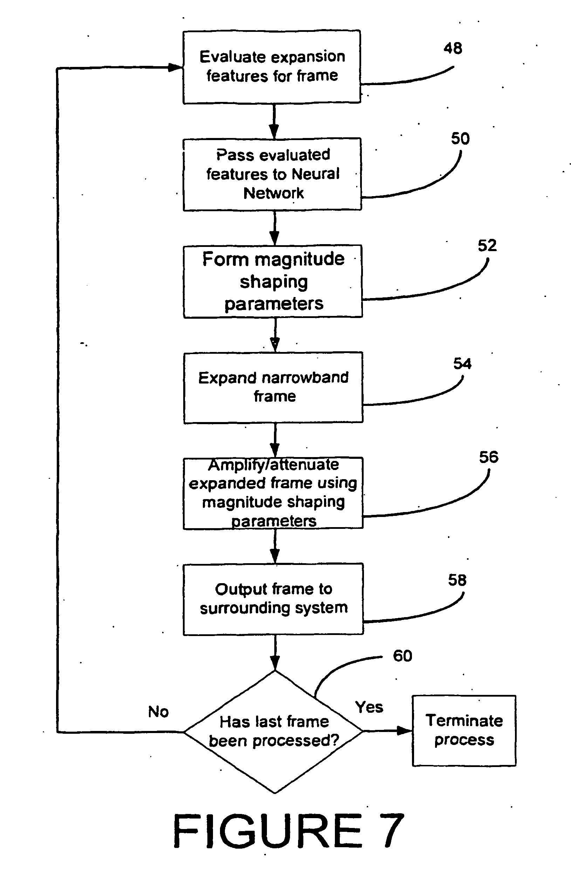

Figure 7 illustrates a method of operation of an online processing subsystem. In operation 48, the FeEM evalutes the expansion features for the frame. The evaluated features can be passed to the NNM as parameters in operation 50. The NNM can use the parameters and (optionally) its own recurrent feedback parameters to evaluate a neural network, which has its weights set according to the genome set by the ESS process. Some outputs of the network can be stored in the NNM to be passed as inputs for the next frame. The NNM forms magnitude shaping parameters in operation 52. The LHTF filter can be used to expand the original narrowband frame to produce a basic expanded frame in operation 54. The basic expanded signal will have a highband with approximately correct harmonic spacing, but, an inaccurate spectral envelope. In other words, the highband harmonics have consistent distance to each other, but their distance to the lowband harmonics may be incorrect. The expanded frame can be attenuated and amplified in the MSM in operation 56 using magnitude shaping parameters produced by the NNM to control the magnitude modulation. In operation 58, the final expanded frame can be output to the surrounding system. Operation 60 determines if there are more frames to be processed. If so, the method returns to operation 48. If not, the process can be terminated.

The FeEM is responsible for evaluating the frame features passed to the NNM. In effect, the features are the sensors of the expansion process. The expansion quality can be directly related to the quality of features selected by the FeEM. If the features do not contain information that is important for deciding how a frame should be expanded, a low quality expansion can result. If irrelevant information is sent to the NNM, the NNM can be overloaded making it difficult for the NNM to make good decisions. As such, preferably, the selected features should be accurate, and give all relevant information, while discarding the information irrelevant for the expansion process.

Preferably, the FeEM should select as few features as possible to minimize the dimensionality of the solution space the neuroevolution process must search. Each additional search space dimension can slow the learning process and can also add to the risk of not reaching a solution at all. In addition, the number of training samples needed to prevent overtraining grows with the input space dimension. For fully connected neural networks, the number of free parameters can grow quite aggressively when input are added. The FeEM should be configured to weigh the tradeoff between providing the NNM will all the possible features that could be useful for the process so that the NNM has all the information it needs and minimizing the number of features provided to keep the size of the search space feasible.

Various methods can be used for solving the information tradeoff. The FeEM can FFT transform the signal frames so both time and spectral domain features can be used without extra cost and thus the selected features can be implemented in the domain in which it is easiest to implement.

One of the features selected by the FeEM is the gradient index. The gradient index is based on the sum of magnitudes of the gradient of the speech signal at each change of direction. It can be defined as:

$$x_{gi} = \frac{1}{10} \cdot \frac{\sum_{\kappa=1}^{N_\kappa-1} \Psi(\kappa)|s_{nb}(\kappa) - s_{nb}(\kappa-1)|}{\sqrt{\sum_{\kappa=0}^{N_\kappa-1} (s_{nb}(\kappa))^2}},$$

where $\psi(\kappa) = 1/2|\psi(\kappa) - \psi(\kappa)|$, in which $\psi(\kappa)$ denotes the sign of the gradient $s_{nb}(\kappa) - s_{nb}(\kappa-1)$. The gradient index can have low values during voiced sounds and high values during unvoiced sounds.

Another feature which can be used is the differential energy ratio. The differential energy ratio can be defined as the ratio of energy of the second derivative of the signal and the energy of the signal. The second derivative can be approximated with an FIR filter with impulse response $h(n) = \delta(n) - 2\delta(n-1) + \delta(n-2)$. The differential energy ratio can be expressed as:

$$x_{der} = \frac{\sum_{\kappa=2}^{N_\kappa-1} (s_{nb}(\kappa) - 2s_{nb}(\kappa-1) + s_{nb}(\kappa-2))^2}{\sum_{\kappa=0}^{N_\kappa-1} (s_{nb}(\kappa))^2}$$

Another feature which can be used is the ratio of energies feature. This feature is capable of detecting temporal changes in relative signal energies and can be defined as the logarithm of the radio of current and last frame energies. It can be expressed as:

$$x_{roe} = \log \frac{E_n}{E_{n-1}}$$

Because the neural network can have a control task, it can be helpful to know something about the power at the different spectral bands of the original narrowband frame to be able to deduce the desired amplification levels and thus the control values that should be output to the MSM. One feature which can be used for this purpose is the average sub-band magnitude features. The average sub-band magnitude can be defined as the average magnitude of some or all of the spectral sub-bands. The average sub-band magnitudes can be transformed into a logarithmic (decibel) domain to make it easier for the neuroevolution to extract the relevant information and to make the feature more human readable. The average sub-band magnitude feature can be expressed as:

$$x_{asm} = 20 * \log_{10} \frac{\sum_{k=k_0}^{k_1} |S_{nb}(k)|}{k_1 - k_0}$$

where $k_0$ is the FFT index corresponding to the starting frequency and $k_1$ is the FFT index corresponding to the ending frequency of the processed spectral band and $S_{nb}(k)$ is the FFT coefficient with index $k$.

The NNM can be responsible for transforming the input features passed from the FeEM into parameters used by the MSM to produce a magnitude shaping curve for the expansion band. The NNM weights are passed from the ESS genome. The NNM can be used as a function approximator to estimate the mapping from features to MSM parameters. The ESS can be configured to do all the required learning so that no learning algorithm is required in the NNM.

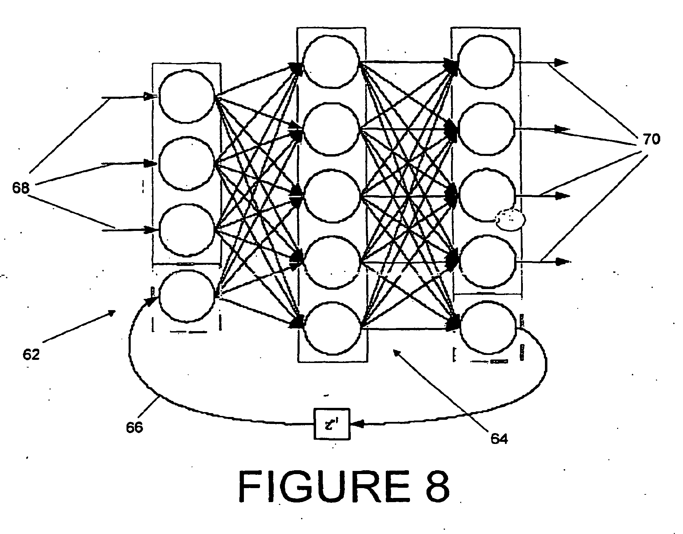

Figure 8 illustrates an NNM 62.

The NNM 62 comprises a Multi-Layer Perceptron (MLP) feedforward neural network 64 with an optional feedback output 66. The neural network 64 receives inputs 68 in the form of selected frame features from the FeEM. The neural network 64 can produce magnitude shaping parameter outputs 70 and feedback outputs 66. The feedback outputs 66 can be feed back into the neural network 64 as inputs. The information carried by the feedback outputs 66 can be used to improve the expansion fitness by serving as inputs to the next frame. The magnitude shaping parameter outputs 70 can feed the MSM magnitude shaping parameter information.

The neural network shown in Fig. 8 is a combination feedforward/recurrent MLP network. The feedforwardness of the MLP network allows the network to be simple and have a smaller number of weights and the recurrent portions of the network allows the potential to learn to utilize long-term feature information. The MLP network shown in Fig. 8 is not a complete recurrent MLP. There are only a limited number of signaling channels available and thus the different neurons are forced to compete for the channels, instead of each hidden neuron having their own feedback channels directly to the other hidden neurons. However, this reduces the number of weights needed, which simplifies the learning task at hand. In addition, it is possible that an MLP with feedback could evolve into a structure which is the equivalent of the complete recurrent network if that is the optimal structure for the task and enough communication channels are given. Also, implemented in the fashion shown in Fig. 8, the amount of recurrent feedback can be easily controlled.

In one embodiment, the inputs 68 for the neural network 64 can be normalized during the teaching process by scaling them using the estimated means and standard deviances for the features. For N available data of the $k$th feature the following calculations can be made:

$$\bar{x}_k = \frac{1}{N} \sum_{i=1}^{N} x_{ik}, \qquad k = 1, 2, \ldots, l$$

$$\sigma_k^2 = \frac{1}{N-1} \sum_{i=1}^{N} (x_{ik} - \bar{x}_k)^2$$

$$\hat{x}_{ik} = \frac{x_{ik} - \bar{x}_k}{\sigma_k}$$

The resulting normalized features can have zero mean and unit variance. The online processing subsystem 14 deployed into the final operating environment can use the estimates found during training.

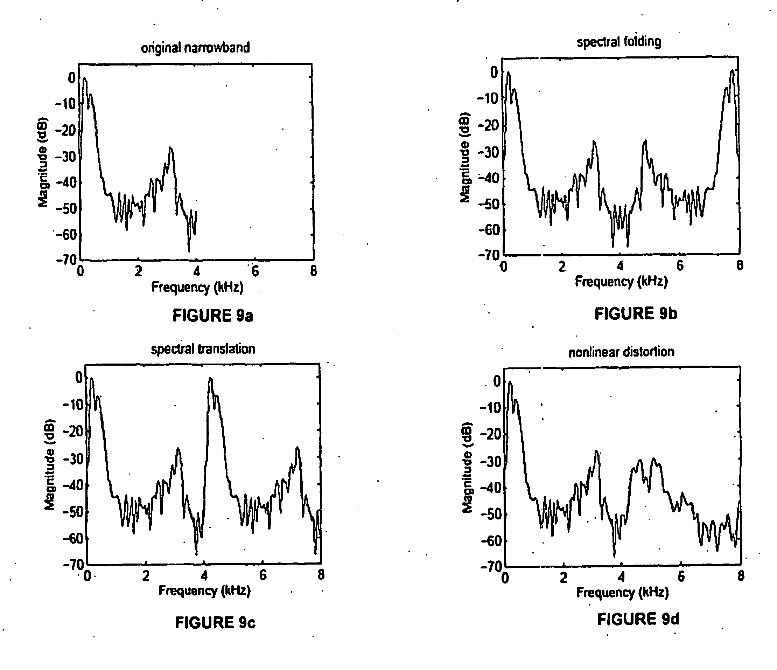

The LHTF can be configured to transform the narrowband input frame into a wideband frame, creating a basic highband which can be shaped by the MSM to form the final expansion band. The wideband frame can be generated using spectral folding by controlled aliasing to produce the highband. The narrowband signal can be upsampled by two, by inserting zeros between the samples in the narrowband frame. This approach is similar to mirroring the lowband into the highband in the frequency domain. Fig. 9a illustrates one example of an original narrowband magnitude spectrum and Fig. 9b illustrates one example of the results of spectral folding to create an unshaped wideband signal.

In an alternative approach, transforming the lowband into a highband comprised a simple translation in the spectral domain. This creates an exact copy of the lowband as a highband. Fig. 9c illustrates one example of the results of a spectral translation.

In still another alternative approach, nonlinear distortion of the upsampled and lowpass filtered signal to generate the highband information and combining it with the original narrowband lowband in the spectral domain can be used. In this example, the nonlinearity used is a simple quadratic, suing the function $g(s(n)) = (s(n))^2$, which can be configured to produce harmonic distortions only therefore ensuring that the tonal components of the generated wideband signal match the harmonic structure of the bandlimited signal during voiced sounds. One example of the results of the nonlinear distortion is illustrated in Fig. 9d.

The MSM can be responsible for attenuating and amplifying the highband produced by the LHTF to produce the final, natural sounding expansion band for the speech frame. It can use information extracted from frame features by the neural network to create a modulation curve which can be used to adjust the spectral envelope of the LHTF generated highband to better resemble the original wideband signal.

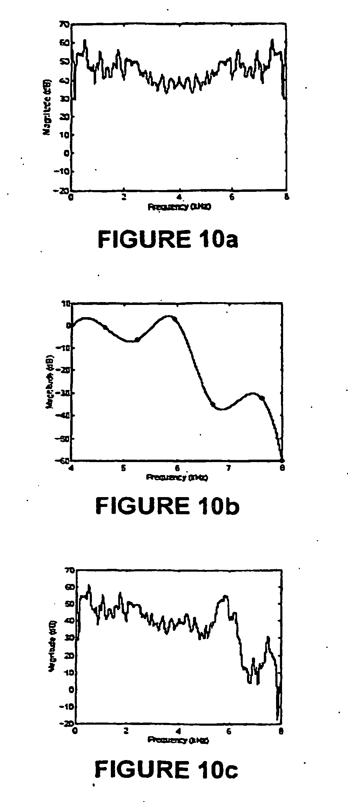

Fig. 10a illustrates one example of an LHTF expanded frame. Fig. 10b illustrates one embodiment of a magnitude shaping curve for the frame. Fig. 10c illustrates one example of an expanded frame after magnitude shaping has been performed.

The shaping curve can be selected independent of the other modules by the MSM. The neuroevolution process can strive to optimize the module input parameters for the selected curve. Preferably, the magnitude shaping curve should not be too flexible, otherwise overfitting may occur. It is desirable that the magnitude shaping curve is coarse to guarantee that the harmonic structure of the speech signal remains continuous while the spectral envelope is adapted. In addition, the curve should be adapted to balance the number of free parameters to make learning more efficient, while still including enough parameters to be able to adapt well to the high frequency range of the original wideband signal during training.

Preferably, the magnitude shaping curve should be smooth, since abrupt, discontinuous changes in the spectral envelope generally rare and could cause the curve to have a long impulse response. This could lead to quality degradation caused by impulse response clipping induced by short frame length. A smooth curve is also intuitively more pleasing as one role of the MSM can be a filter in the source-filter model and with the LHTF performing the role of the source. Therefore, preferably the magnitude shaping curve should be continuous. In practice, to this end, the LHTF can be configured so that it does not introduce any spectral envelope discontinuities.

In addition to other features of the magnitude shaping curve, computational efficiency can be considered as well as real-time curve generation. In one example, cubic spline can be used as the curve type. They are smooth, local (a change in some part of the curve changes only a finite number of control points surrounding it), interpolative curves with feasible computational requirements. Interpolativity can make it easy to achieve a continuity in the spectral domain between the low and high bands by simply setting the first control point of the curve to move the beginning of the highband spectrum to coincide with the lowband spectrum endpoint.

The magnitude shaping control for splines can be done using fixed frequency control points. The selection of the control points can affect the flexibility and level of control the curve has on different sub-bands of the signal. As such, the number of control points should be such that adequate frequency resolution for efficient control of the spectral envelope is reached, but the module does not alter the harmonic structure of the signal or adapt to possible noise in the teaching samples.

In addition to the number of control points, their relative locations can be assigned. In one embodiment of the invention, instead of setting the control points to a fixed distance from each other they are set to fixed frequency warped locations to give the control system a frequency resolution similar to that of the human auditory system. In embodiments using telephone speech samples, care should be taken when setting control points in spectral gaps. In one example, fixed amplification can be used to prevent excessive amplifications or attenuations for control points situated in spectral gaps.

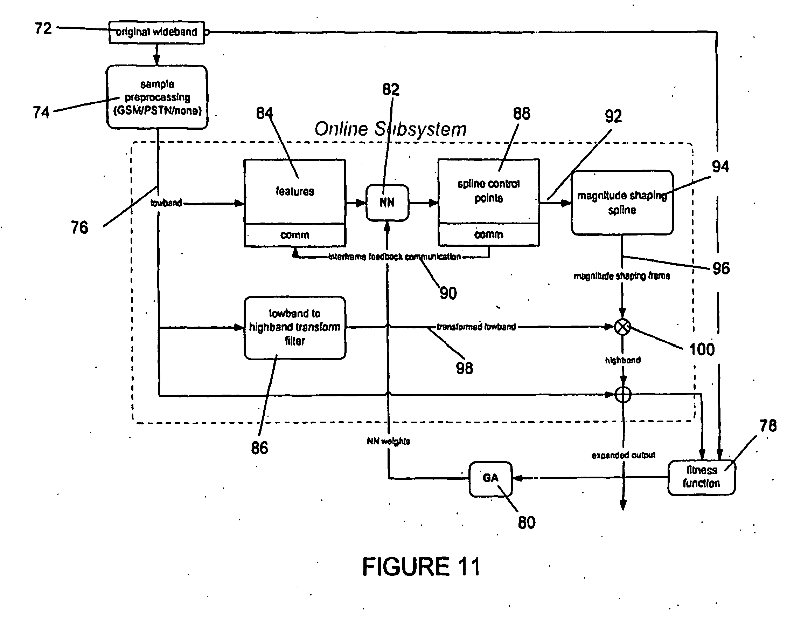

Fig. 11 illustrates a neuroevolution-based artificial bandwidth expansion system. In this system, the original wideband signal 72 is prepossessed by a particular application 74 for use and/or transmission by the application. The application 74 preprocesses the wideband signal into a narrowband signal which is eventually feed into the online processing subsystem 76 situated in the application environment. The original wideband signal 72 is also feed into the FiEM 78 evaluates the wideband signal which was artificially expanded by the online processing subsystem 76 by comparing it with the original wideband signal 72. The FiEM 78 outputs an objective fitness value to the EM 80 which uses the objective fitness value to perform an artificial evolution by mutating and recombining the best performing individual genomes for the system. The EM 80 provides an ESS genome to a neural network (NN) 82 in the online processing subsystem 76 in the form of NN weights. While examples have been discussed comprising neural networks, it should be noted that other methods and devices for producing a spectral shaping curve or function can be used. For example, a fuzzy logic controller or other device can be used in place of a neural network to identity features of the original narrowband signal and produce a spectral shaping curve or function based on these features such that the spectral shaping curve is indicative of the original speech signal carried by the narrowband speech signal.

The narrowband signal entering the online processing subsystem 76 is feed into the FeEM 84 as well as the LHTF 86. The FeEM 84 evaluates features of the frames of the narrowband signal and passes selected features to the NN 82 in the form of parameters. The NN 82 transforms the feature parameters into magnitude shaping information. In this example, the magnitude shaping information is in the form of spline control points 88. The spline control points 92 are fed into the MSM 94. The MSM 94 uses the spline control points 92 to produce a magnitude shaping frame 96.

Some of the neural network outputs can be feed back to the FeEM 90 to be used as feedback for the next processed frame. These feedback outputs can be arbitrary output information selected by the evolution which can be used to help in the expansion of the next frame.

Simultaneously, the LHTF 86 transforms the inputted narrowband signal into a unshaped wideband signal 98. The unshaped wideband signal 98 is combined with the magnitude shaping frame 96 by a combiner thus producing an artificially expanded wideband signal from the inputted narrowband signal.

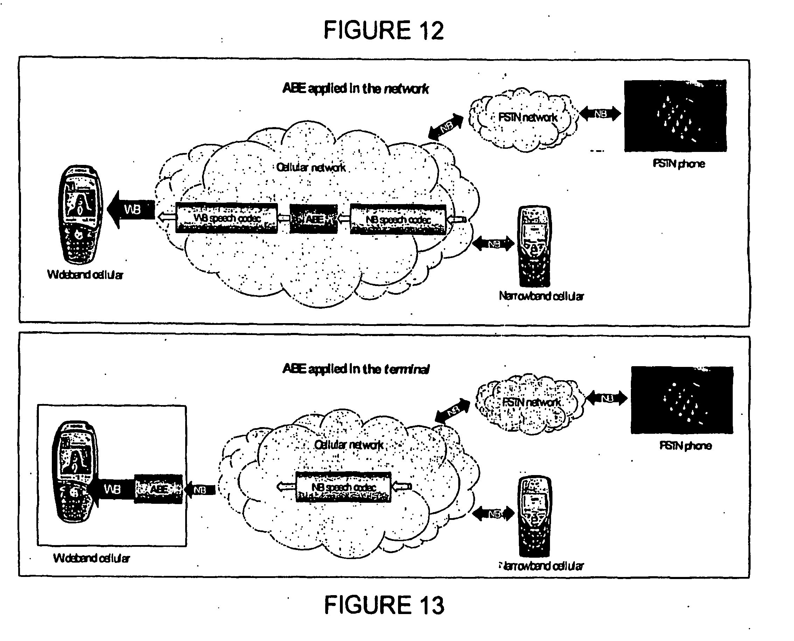

Fig. 12 illustrates how the artificial bandwidth expansion (ABE) can be applied in a network. As applied in the network, the ABE (implemented as an online processing subsystem according to embodiment of the present invention) can be implemented in networks that used both narrowband and wideband codecs. FIG. 13 illustrates how the artificial bandwidth expansion (ABE) can be applied in a terminal. As applied in the terminal, the ABE is located at the terminal and receives narrowband communications from the network. The ABE (implemented as an online processing subsystem expands the communication to a wideband for the terminal. The ABE algorithm can be implemented with a digital signal processor (DSP) in the terminal.

It should be understood that the invention is not confined to the particular embodiments set forth herein as illustrative, but embraces all such modifications, combinations, and permutations as come within the scope of the appended claims. The present invention in not limited to a particular operating environment. Those skilled in the art will recognize that the systems, methods, devices and computer code products of the present invention may be advantageously operated on different platforms. Thus, the description of the exemplary embodiments is for purposes of illustration and not limitation.

**Claims**

1. A neuroevolution training system for creating genomes to be used by an online processing system for expanding narrowband speech signals into artificially expanded wideband speech signals, the neuro evolution training system comprising:

   a learning sample management module configured to manage speech samples that can be used to train the system;
   a fitness evaluation module configured to evaluate the quality of the artificially expanded wideband speech signals by using a metric that measures the psychoacoustic quality of the artificially expanded wideband speech signals; and
   an evolution module configured to perform an artificial evolution by mutating and recombining the genomes based on the evaluation of the fitness evaluation modules.

2. The system of claim 1, wherein the fitness evaluation module is configured to compare the artificially expanded wideband speech signal to a corresponding speech sample in the learning sample management module to determine if the artificially expanded wideband speech signal is similar to the original wideband sample of speech.

3. The system of claim 1, wherein the fitness evaluation module is configured to produce an objective fitness value of the artificially expanded wideband speech signal.

4. The system of claim 3, wherein the evolution module is configured to use the object fitness value to create a fitness ranking for the genomes.

5. The system of claim 4, wherein the evolution module can select genomes for reproduction based on fitness rankings for the genomes.

6. The system of claim 1 wherein the learning sample management module is configured to provide a narrowband speech signal to the online processing system and to provide a corresponding wideband speech signal to the fitness evaluation modules.

7. The system of claim 1 wherein the evolution module is further configured to act as a process controller for directing operation of the learning sample management module and the fitness evaluation module.

8. The system of claim 1 wherein the evolution module is further configured to generate an initial population of genomes.

**Patentansprüche**

1. Neuroevolutions-Trainingssystem zum Erzeugen von Genomen, die von einem Online-Verarbeitungssystem zum Erweitern von Schmalband-Sprachsignalen in künstlich erweiterte Breitband-Sprachsignale verwendet werden sollen, wobei das Neuroevolutions-Trainingssystem umfasst:

   - ein lernendes Proben-Verwaltungsmodul, das eingerichtet ist, Sprachproben zu verwalten, die zum Trainieren des System verwendet werden können;
   - ein Tauglichkeits-Auswertungsmodul, das eingerichtet ist, die Qualität der künstlich erweiterten Breitband-Sprachsignale auszuwerten, unter Verwendung einer Metrik, welche die psychoakustische Qualität der künstlich erweiterten Breitband-Sprachsignale misst; und
   - ein Evolutions-Modul, das eingerichtet ist, eine künstliche Evolution auszuführen, durch Mutieren und Rekombinieren der Genome, basierend auf der Auswertung des Tauglichkeits-Auswertungsmoduls.

2. System nach Anspruch 1, wobei das Tauglichkeits-Auswertungsmodul eingerichtet ist, das künstlich erweiterte Breitband-Sprachsignal mit einer entsprechenden Sprachprobe in dem lernenden Proben-Verwaltungsmodul zu vergleichen, um zu bestimmen, ob das künstlich erweiterte Breitband-Sprachsignal der ursprünglichen Breitband-Sprachprobe gleicht.

3. System nach Anspruch 1, wobei das Tauglichkeits-Auswertungsmodul eingerichtet ist, einen objektiven Tauglichkeits-Wert des künstlich erweiterten Breitband-Sprachsignals zu erzeugen.

4. System nach Anspruch 3, wobei das Evolutions-Modul eingerichtet ist, den objektiven Tauglichkeits-Wert zu verwenden, um eine Tauglichkeits-Rangfolge für die Genome zu erzeugen.

5. System nach Anspruch 4, wobei das Evolutions-Modul Genome zur Reproduktion basierend auf Tauglichkeits-Rangfolgen der Genome auswählen kann.

6. System nach Anspruch 1, wobei das lernende Proben-Verwaltungsmodul eingerichtet ist, dem Online-Verarbeitungssystem ein Schmalband-Sprachsignal bereitzustellen und dem Tauglichkeits-Auswertungsmodul ein entsprechendes Breitband-Sprachsignal bereitzustellen.

7. System nach Anspruch 4, wobei das Evolutions-Modul weiter eingerichtet ist, als eine Prozesssteuerung zu agieren, um den Betrieb des lernenden Proben-Verwaltungsmoduls und des Tauglichkeits-Auswertungsmoduls zu leiten.

8. System nach Anspruch 4, wobei das Evolutions-Modul weiter eingerichtet ist, eine anfängliche Population von Genomen zu erzeugen.

**Revendications**

1. Système d'entraînement de neuroévolution pour créer des génomes à utiliser par un système de traitement en ligne afin d'amplifier des signaux vocaux à bande étroite en signaux vocaux à bande large artificiellement amplifiés, le système d'entraînement de neuroévolution comprenant :

   un module de gestion d'échantillon d'apprentissage configuré pour gérer les échantillons vocaux qui peuvent être utilisés pour entraîner le système ;
   un module d'évaluation de l'aptitude, configuré pour évaluer la qualité des signaux vocaux à bande large artificiellement amplifiés, en utilisant un système de mesure qui mesure la qualité psycho-acoustique des signaux vocaux à large bande artificiellement amplifiés et
   un module d'évolution configuré pour réaliser une évolution artificielle en mutant et en recombinant les génomes sur la base de l'évaluation des modules d'évaluation de l'aptitude.

**2.** Système selon la revendication 1, dans lequel le module d'évaluation de l'aptitude est configuré pour comparer le signal vocal à bande large artificiellement amplifié à un échantillon vocal correspondant dans le module de gestion d'échantillon d'apprentissage, afin de déterminer si le signal vocal à bande large artificiellement amplifié est similaire à l'échantillon vocal à bande large original.

**3.** Système selon la revendication 1, dans lequel le module d'évaluation de l'aptitude est configuré pour produire une valeur d'aptitude objective du signal vocal à large bande artificiellement amplifié.

**4.** Système selon la revendication 3, dans lequel le module d'évolution est configuré pour utiliser la valeur d'aptitude objective afin de créer un classement d'aptitude pour les génomes.

**5.** Système selon la revendication 4, dans lequel le module d'évolution peut choisir des génomes pour la reproduction, sur la base des classements d'aptitude pour les génomes.

**6.** Système selon la revendication 1, dans lequel le module de gestion d'échantillon d'apprentissage est configuré pour fournir un signal vocal à bande étroite au système de traitement en ligne et pour fournir un signal vocal à bande large correspondant aux modules d'évaluation de l'aptitude.

**7.** Système selon la revendication 1, dans lequel le module d'évolution est en outre configuré de façon à agir comme un contrôleur de processus pour diriger le fonctionnement du module de gestion d'échantillon d'apprentissage et le module d'évaluation de l'aptitude.

**8.** Système selon la revendication 1, dans lequel le module d'évolution est en outre configuré pour générer une population initiale de génomes.

# FIGURE 1

FIGURE 2

FIGURE 3

FIGURE 4

# FIGURE 5

weights from ESS genome

40

42

narrowband
frame

Feature Evaluation

features

Neural Network

magnitude shaping
parameters

recurrent connections

LHTF filter

pre-expanded frame

Magnitude Shaping

expanded
frame

14

44

46

# FIGURE 6

Evaluate expansion
features for frame — 48

Pass evaluated
features to Neural
Network — 50

Form magnitude
shaping
parameters — 52

Expand narrowband
frame — 54

Amplify/attenuate
expanded frame using
magnitude shaping
parameters — 56

Output frame to
surrounding system — 58

Has last frame
been processed? — 60

No

Yes

Terminate
process

# FIGURE 7

FIGURE 8

FIGURE 9a

FIGURE 9b

FIGURE 9c

FIGURE 9d

**FIGURE 10a**

**FIGURE 10b**

**FIGURE 10c**

FIGURE 11

FIGURE 12

FIGURE 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MNH SIDDIQUE et al.** Training Neural Networks: Backpropagation vs Genetic Algorithms. *Proc. International Conference on Neural Networks,* July 2001

- **D BARRIOS et al.** Cooperative binary real coded genetic algorithms for generating and adapting certificial neural networks. *Neural Computing and Applications,* November 2003, vol. 12 (2